Europäisches Patentamt

European Patent Office

Office européen des brevets

(19)

(11) **EP 0 550 166 B1**

(12)

# EUROPEAN PATENT SPECIFICATION

(45) Date of publication and mention
of the grant of the patent:
**06.09.2000 Bulletin 2000/36**

(51) Int. Cl.$^7$: **H04N 5/21**

(21) Application number: **92311183.5**

(22) Date of filing: **08.12.1992**

(54) **Method and filter to eliminate the noise in a picture sequence**

Verfahren und Filter zum Entfernen von Rauschen in einer Bildsequenz

Procédé et filtre pour éliminer le bruit dans une séquence d'images

(84) Designated Contracting States:
**DE ES FR GB IT NL SE**

(30) Priority: **30.12.1991 FI 916162**

(43) Date of publication of application:
**07.07.1993 Bulletin 1993/27**

(73) Proprietor:
**Nokia Multimedia Terminals Oy
20310 Turku (FI)**

(72) Inventor: **Hämäläinen, Matti
SF-33720 Tampere (FI)**

(74) Representative:
**Singleton, Jeffrey et al
Eric Potter Clarkson,
Park View House,
58 The Ropewalk
Nottingham NG1 5DD (GB)**

(56) References cited:
**DE-A- 3 617 827          DE-A- 4 031 785
FR-A- 2 368 189          FR-A- 2 575 886
GB-A- 2 138 237          GB-A- 2 206 012
US-A- 4 833 537          US-A- 4 928 258**

• SMPTE JOURNAL vol. 87, no. 3, March 1978,
SCARSDALE, NY US pages 134 - 140 ROSSI
'Digital techniques for Reducing Television
Noise'

**Description**

The present invention relates to a method and a filter to eliminate the noise in a picture sequence, in which the input information is filtered by a recursive filter having a recursion non-linearly adapted with a controller, and in which the filtered information is stored in a memory and in which the filtered previous information is obtained from the memory.

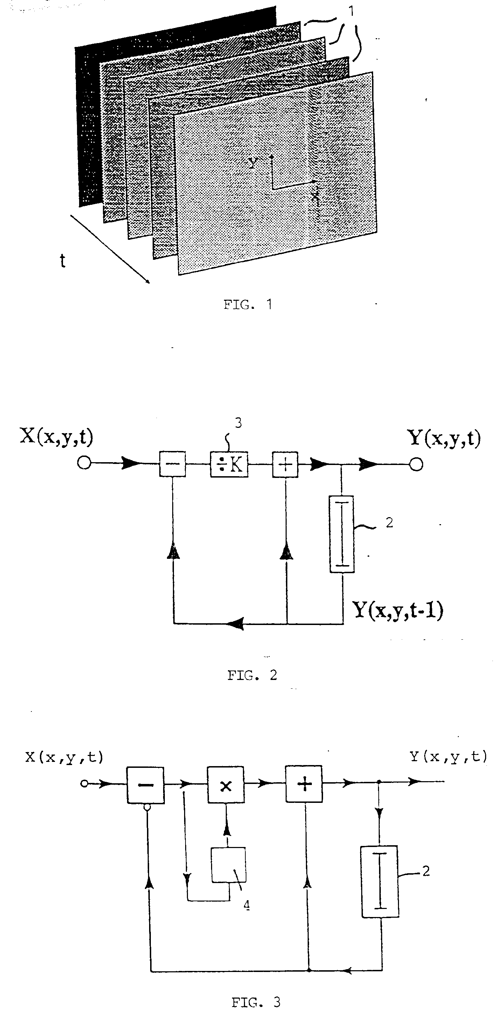

The picture sequences are three-dimensional (3-D) signals. Two of the dimensions comprise the picture surface and the third represents time. The picture sequences further comprise three different color components, which can be e.g. the luminance and color difference components (Y,I,Q) or (Y,U,V), or the color components (R,G,B). Figure 1 shows the picture sequence structure comprising several (two-dimensional) pictures on the time axis t. An interleaved picture can be divided on the basis of even and odd lines into two fields, the samples of which can be processed as components or as vector values. The picture sequences are by nature very random and may contain stationary areas and areas with motion. The sample values can vary within certain limits in three dimensions x, y, t, and further in relation to three picture components, as mentioned above. Motion in the picture is an example of a phenomenon causing abrupt changes in the contents of the picture sequences. Therefore it would be of advantage if picture reproducing equipment, such as television receivers, projecting devices and multimedia devices belonging to future plans, could comprise filters retaining these changes.

Noise is a natural phenomenon in telecommunication systems and it occurs in many different ways in radio and television networks. Already when a picture is recorded, noise is generated in the television camera. Noise is further caused by the electronic circuits processing and transmitting the signal, and yet more noise is caused by recorders when the signal circulates in a noisy loop during post production. The transmitter, the transmitting channel and the receiver also distort the signal. The noise superimposed on the signal in the transmitting channel depends on the information transmitting means, i.e. whether satellite or landline transmission is used. Other noise containing sources are e.g. programs produced from narrowfilms containing noise and scratches, and programs which are viewed from video cassettes containing noise and drop-outs. Correspondingly, picture sequences of the above mentioned projecting and multimedia devices can contain noise, as well as the picture sequences of a television receiver.

The quality of the picture sequence can be improved with digital filtering methods. The filtering improves the picture quality and at the same time it facilitates the utilization of the picture's information content in further processing. Because a television receiver, a projecting device and a multimedia device should reproduce a picture sequence with high quality for all signals received by them, their noise elimination filters should be robust. In other words, the filters should efficiently eliminate varying noise types and still retain a high picture quality. Robust filters tolerate very well deviations from the default noise values without an essentially decreasing filtering level. Linear and non-linear filtering can be used to eliminate the noise, both having their advantages.

Roundening of border surfaces and details could be regarded as a disadvantage of non-linear filtering. Non-linear filtering may be perceived as a "softening" of the picture, i.e. the border surfaces will not be seen as steps changing sharply, but e.g. as ramps changing slowly from one value to another. On the other hand non-linear methods, such as median filtering, will retain step changes occurring repeatedly in the picture information.

The filters also essentially differ regarding their noise attenuating characteristics. In practise a large portion of the noise received in television receivers can be modelled by a normal distribution, on which linear methods work better. Transients caused mainly by random reasons and sources, such as by industrial or telecommunications disturbances, and a low carrier to noise ratio will cause the FM demodulator to lose the phase. These secondary noise peaks have a very short duration and a high amplitude, and they are generally called pulses.

An averaging filter may provide a poor result, even when only one pulse appears at the filter input. Therefore merely linear filters are not considered to be robust filters, because they do not limit the pulse's maximal influence on the output. Correspondingly, the output of a median filter is reliable for a standard signal only as long as less than half of the input samples are pulses.

Linear filters that form the average in the time direction can in principle be realized in two different ways. The signal can be transmitted through several delay means, e.g. memories, in which each delay has the length of one picture sequence, and then the average of the signals from each stage is formed. Alternatively it is possible to use recursive filtering, which is a generally known noise elimination method. Then the picture sequence is filtered by a one-dimensional recursive filter, which forms the average in time, and which is shown in figure 2. This filter requires only one picture or field memory. For the sake of simplicity, the memory element is below called a picture memory, even though a recursive filter can be realized also as a field memory for an interleaved picture. Then we presume that the even and odd fields are not substantially different. The output signal $Y(x,y,t)$ of the filter is a fraction $1/K$ of the input signal $X(x,y,t)$, and a fraction $1-(1/K)$ of the output signal $Y(x,y,t-1)$ of the previous picture, in which x and y represent the sample location in the picture, t represents the location on the time axis, and K is a recursion factor depending on the picture information. Corresponding pixels of sequential pictures and the previous filtered picture form an average as follows: $Y(x,y,t) = (1 - 1/K) * Y(x,y,t-1) + 1/K * X(x,y,t)$. If the picture memory 2 is replaced by a field memory 2, then the filtering of a stationary picture does not anymore function totally without errors, particularly at the border surfaces of details in the picture. It is easily seen from the above formula, that for a stationary picture the changes occurring in the filter input signal X(x,y,t) are caused only by noise. In this case it is preferable to select the recursion factor K to have a value as high as possible. Generally the values of the recursion factors in recursive filters vary in the range $1 \leq K \leq 8$. It is not possible to use a recursive filter of the first order (linear) directly to filter the picture sequences, because moving details are distorted to a considerable degree. In order for the filter to function also on areas containing motion, it is possible to adjust the recursion factor K so that the recursion factor K is always forced close to the value 1, when filtering an area having local statistical characteristics suggesting a change in the picture information.

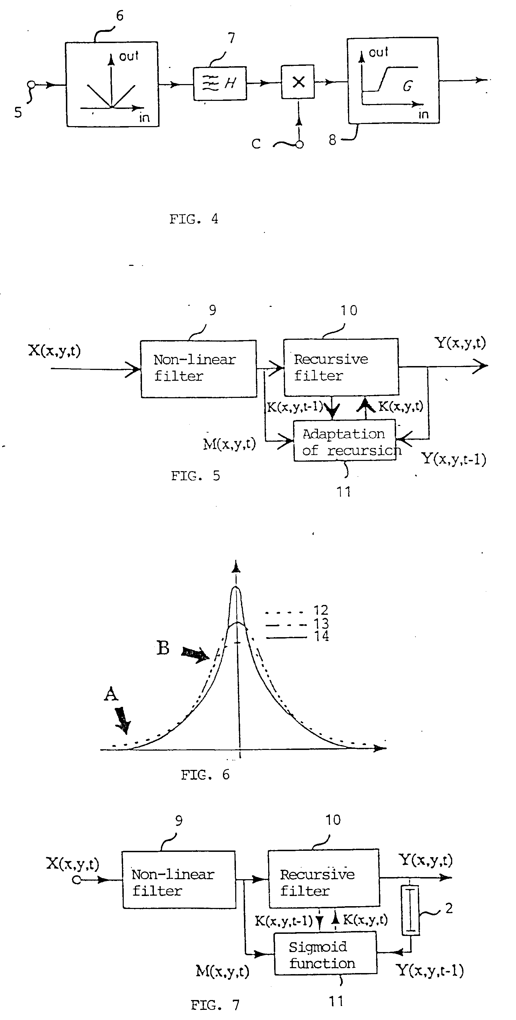

In motion adaptive filtering the problem is basically very similar to that presented above. The main differences arise in the methods used to recognize motion. The basis in these methods is generally to neglect the filtering of picture areas containing motion. In figure 3 is shown one alternative to realize the first order recursive filter based on motion recognition, which hardly differs from the solution shown in figure 2, but the divider 3 with divisor K is replaced by a motion recognition circuit 4. The motion recognizer 4 provides a corresponding factor K, whose value approaches 1 when the motion increases in the television picture. The basic components of the motion recognizer 4 could be represented e.g. as in figure 4, in which the difference picture 5 of sequential pictures is corrected to a picture, whose values correspond to the deviation from the average (rectifying 6). This picture is filtered by the filter 7 of low-pass type, and eventually the recursion factor is provided by the non-linearity 8, which may be e.g. a look-up table. The low-pass filtering 7 attenuates the noise in the recognition signal, but at the same time it will particularly attenuate the distinction of small moving details by making otherwise clear boundaries less sharp. We must remember that pulses will unhindered pass to the linear filter input. Thus it is advisable to use non-linear filters to filter out the pulses.

In a noise elimination circuit developed for the NTSC standard there is a color subcarrier comb filtering connected to the motion detector. Compared to figure 4 the comb filtering is realized before the correction of the difference picture, and before the non-linearity 8. It is of course also possible to reduce the noise caused by the color sub-carrier in other motion recognition methods, although it is not separately shown in figure 4. The same applies also to the filter according to the invention, if it is required by the used standard. All these above methods will generally lead to problems when the noise level increases so much that it is not possible to separate changes caused by motion from those caused by noise. It has been sought to obviate this disadvantage by using in the motion detector additionally a global noise factor which describes the general noise level of the transmission. In this way the form of the non-linearity in the motion detector can be changed according to the situation, or the intensity of the difference picture 5 can be changed by a desired factor C. The noise factor can be measured on the so called empty lines.

The biggest disadvantages of traditional recursive filtering methods are that the noise is not eliminated from picture areas containing motion, the filter will not effectively attenuate noise of the pulse type, the motion information provided by a simple averaging motion detector is not accurate in the border regions, and the pulse noise may easily be interpreted as a larger moving detail when averaging motion detection is used, whereby the attenuating characteristics of the filter will collapse.

An article entitled "Digital Techniques for Reducing Television Noise", published in SMPTE Journal, Vol. 876, no. 3, March 1978, pages 134-140, describes a method for eliminating noise in a picture sequence in which the input information is filtered by a recursive filter and in which the input information is first filtered with a corer. The corer crispens the image boundaries but removes some of the signal details in doing so.

US patent no. 4 928 258 discloses recursive median filtering which may be combined with algebraic filtering to achieve the advantages of both types of filtering techniques. However, none of the filters disclosed therein will retain picture details.

The aim of the present invention is to realize a noise elimination method, in which it is possible to increase the quality of the picture sequence. The method is based on a combination of a linear and a non-linear filtering method, with which combination it is possible both to obtain an effective noise attenuation and to retain stationary details in the picture sequence whose width could even be one picture element (when a picture memory is used). A substantially better gaussian noise attenuation is obtained with the present invention, compared to median filters which retain the details. The noise elimination method according to the invention keeps the picture details sharp, and eliminates effectively both gaussian and Laplace noise, or more generally heavy-tailed noise, i.e. noise having clearly higher energy at the extremes of the distribution when compared with a normal distribution, and distributions being a combination of the above. The method preferably relates to the filtering of separate picture components (Y,U,V; R,G,B; Y,I,Q) of the picture sequence. The filtering can process data also as a signal with a vector value, such as e.g. in the vector median filtering.

The invention provides a method to eliminate noise in a picture sequence according to claim 1. It further provides a filter according to claim 14.

The invention is described in more detail below with reference to the enclosed drawings, in which

figure 1 shows the structure of the picture sequence,
figure 2 shows a recursive filter of the first order,

figure 3 shows a recursive filter of the first order based on motion recognition,

figure 4 shows the basic block diagram of the motion detector,

figure 5 shows the basic block diagram of the filter according to the invention,

figure 6 shows the effect which the filtering according to the invention has on the noise distribution, and

figure 7 shows a more detailed block diagram of the filter according to the invention.

Figures 1 to 4 were already described when the prior art was illustrated. The invention is described below by reference to the figures 5 to 7.

Figure 5 shows the basic block diagram of the of the method according to the invention realized as a filter. All data averaged with the recursive filter 10 is first filtered with a non-linear filter 9, which functions as a robust filter retaining the details. Figure 6 shows how the non-linear filter eliminates the pulses A and improves the possibility to recognize the edges, because the non-linear filter 9 retains the edges and attenuates the noise more strongly on the regular areas than on the edge areas, and the recursive filter 10 attenuates more effectively the noise distribution B with a low amplitude (short and medium tailed noise), because, as was mentioned above, the motion recognition interprets gross deviations as motion, and therefore the pulses are not filtered. The curve with the dot line in figure 6 represents the noise distribution 12 of the original unfiltered signal, the curve with the broken line shows the noise distribution 13 filtered with a non-linear filter, e.g. a median filter, and the curve with the continuous line shows the noise distribution 14 filtered with the filter according to the invention.

As the non-linear filter 9 several rank-order based filters can be advantageously used, among these e.g. all median filters (MF), weighted median filters (WM), multilayer median filters (MMF) and max/median filters, or these may be implemented as a part of the filter combination. The non-linear filter 9 can of course also be some other non-linear filter. The non-linear filter can span a one-, a two- or a three-dimensional window either in the picture plane or in the picture and time plane. By a window is meant an environment comprising the examined sample and the adjacent neighboring pixels. The window is moved in the picture sequence in such a way that the value of each picture sequence is estimated based on the sample values contained in that window positioned according to the respective pixel. In the filtering the filter uses for the calculation of a new value several pixels (samples), which can be selected so that they are located, in relation to each other, in one direction in the picture plane or in the time plane; then the window is one-dimensional. If the samples are located in relation to each other in two direction in the picture plane or in one direction in the picture plane and in the same time plane, then the window is two-dimensional. If the samples used for the calculation in the filter in relation to each other are located in two directions in the picture plane and further in different time planes, then the window is three-dimensional. Regarding the recursion efficiency this has a significance mainly in that e.g. the noise filtered by a five-point median filter, defined as

$Y_{med5}(x,y,t) = MED(X(x,y,t-1), X(x-1,y,t), X(x,y,t), X(x+1,y,t), X(x,y,t+1))$ , correlates very strongly regarding the time, containing continuous (streaking) areas. The recursive filter 10 attenuates correlating noise much less than noise non-correlating in time and produced by e.g. a picture plane spanning (spatial) five point median filter. A spatial filter does not increase the noise correlation in time. With larger non-linear filter windows and with a multilayer structure it is possible to obtain a milder noise correlation. An example of a well performing weighted median filter is the filter WM7, having a window size of 7 and the weight sum of 9, and defined as

$Y_{WM7}(x,y,t) = MED(3*X(x,y,t), X(x,y,t-1), X(x-1,y,t), X(x,y+1,t), X(x,y-1,t), X(x+1,y,t), X(x,y,t+1))$ , where * means the repetition of the sample a number of times indicated by the number, or $3*X(x,y,t) = X(x,y,t), X(x,y,t), X(x,y,t)$ . It is essential for the function of the filter combination according to the invention that the non-linear filter 9 retains the details of the picture, eliminates effectively the extremes of the noise distribution, improves the recursion factor efficiency, and further that the noise will not strongly correlate in the temporal direction.

An LMS (Least Mean Square) optimizing method can be used to adapt the recursion factor controller 11, the method being known as the Back-propagation method. In this a continuous and continuously derived, a so called sigmoid-function adapts the inverse value of the recursion factor K as follows: $1/K(x) = 1/\{1+exp(-(\Sigma\omega_i x_i - \omega_0))\}$ , where $\omega_i$ and $\omega_0$ are the parameters to be optimized and $x_i$ are variables affecting the value of the recursion factor. The method is generally known and the sigmoid can also be replaced by other functions, such as piecemeal linear functions. For the optimization of the non-linear controller 11 it is also possible to use optimizing methods based on other error criteria, such as the LMA (Least Mean Absolute) optimizing method. Generally we could say that suitable optimizing methods are method using the $L_P$-norm, which also includes the LMS and the LMA methods. The Back-propagation method is an optimizing method well suited for the purpose of the invention, and as variables of the sigmoid-function we could also use e.g. the difference picture $x_1 = |M(x,y,t) - Y(x,y,t-1)|$ and the inverse of the previous recursion factor, $x_2 = 1/K(x,y,t-1)$ , which were found to represent amazingly well the local statistical characteristics of the sequence. The sigmoid-function can be replaced by some other non-linearity, which may give an almost similar result when approximated in a memory circuit. As input signals for the sigmoid-function it is possible to use several different alternatives other than the difference picture. Thus the filter according to the invention can be illustrated in more detail in figure 7, where the non-linear filter 9 protects the motion recognition against noise effects, the recursive filter 10 provides the averaging and the adaptation of the recursion factor is made with the sigmoid-function in the controller 11, whereby the Back-propagation method can be used to optimize the function parameters $\omega_i$ and $\omega_0$, and whereby in addition to the memory required by the non linear filter, one picture memory is required to store the previous picture. If it is desired to store any other information, it of course requires a memory.

The output to the recursive filter 10 provided by the controller 11 is not necessarily the recursion factor K used here above and shown in figures 5 and 7, because in the same way as the sigmoid-function generates the inverse 1/K of the K, it is possible to use another presentation by changing the definition of the recursive filter. In any case it is essential that the controller 11 transmits to the filter 10 information about the mutual weighting of the previous information Y(x,y,t-1) and the new information X(x,y,t). Accordingly it is possible to use another recursion factor K(x-i,y-j,t-k) instead of the recursion factor K(x,y,t-1) used in the previous picture, which factor the controller 11 may use or may not use to adapt the recursion factor K. The controller 11 receives from the recursive filter via a memory (not shown) the recursion factor K(x,y,t-1) used in the filtering of the previous picture, or any other recursion factor K(x-i,y-j,t-k) or information corresponding to it. The adaptation of the parameters of the non-linear controller 11 can be made in advance of continuously during the filtering. In addition to the absolute value of the difference picture information, |M(x,y,t) - Y(x,y,t-1)|, formed by the output information M(x,y,t) of the non-linear filter and the previous output information Y(x,y,t-1) obtained from memory, it is of course possible to use the difference M(x,y,t) - Y(x,y,t-1) of the pictures, or a difference picture information processed by a desired filter. It is also possible to use the difference picture information X(x,y,t) - Y(x,y,t-1) formed by the unfiltered information X(x,y,t) and the previous output information Y(x,y,t-1), or the absolute value |X(x,y,t) - Y(x,y,t-1)| of this information, or some otherwise generated signal representing the difference picture information. The second input of the controller 11 must not necessarily be the input X(x,y,t) or the output M(x,y,t) of the non-linear filter 9, but it could be some other estimate or intermediate result provided by the non-linear filter 9, whereby this estimate or intermediate result can be generated in some other way on the basis of the non-linear filter 9 the input samples (not shown).

The invention is characterized by a combination of the non-linear filter 9 and the recursive filter 10, and it is not limited to the embodiments shown here, but only by the appended claims.

## Claims

1.  A method to eliminate the noise in a picture sequence, wherein:

    the input information X(x,y,t) is filtered by a non-linear filter (9) acting as a first filter stage to provide output information M(x,y,t);
    the output M(x,y,t) of the non-linear filter (9) is filtered by a recursive filter (10) having a recursion factor (K(x,y,t)) and acting as a second filter stage to provide filtered information Y(x,y,t);
    the filtered information Y(x,y,t) is stored in a memory (2);
    the filtered previous information Y(x,y,t-1) is obtained from the memory (2);
    the recursion factor (K(x,y,t)) of the recursive filter (10) is non-linearly adapted with a controller (11); and
    at least the difference between said information M(x,y,t) and said filtered previous information Y(x,y,t-1) is provided to said controller (11) to be used in the control process, and characterized in that:
    a previous recursion factor (K(x,y,t-1)) is additionally provided to said controller (11) to be used in the control process.

2.  Method according to claim 1, characterized in that the filtered previous information Y(x,y,t-1) is supplied from the memory (2) to the recursion controller (11) for the recursive filtering of the next input information M(x,y,t).

3.  Method according to claim 1 or claim 2, characterized in that several different difference picture informations are used to adapt the recursion factor (K(x,y,t)) of the recursive filter (10).

4.  Method according to claim 3, characterized in that the difference picture information X(x,y,t)-Y(x,y,t-1) is used to adapt the recursion factor (K(x,y,t)) of the recursive filter (10), the difference picture information being formed by the unfiltered information X(x,y,t) and the filtered previous information Y(x,y,t-1) obtained from the memory (2).

5.  Method according to claim 3, characterized in that a difference picture information is used to adapt the recursion factor (K(x,y,t)) of the recursive filter (10), the difference picture information being formed by an estimate produced by the non-linear filter (9) and the filtered previous information Y(x,y,t-1) obtained from the memory (2).

6.  Method according to claim 4 or claim 5, characterized in that the absolute value of the difference picture information is used to adapt the recursion factor (K(x,y,t)) of the recursive filter (10).

7. Method according to any one of the previous claims, characterized in that additionally a recursion factor (K(x-i,y-j,t-k)) is used to adapt the recursion factor (K(x,y,t)) of the recursive filter (10).

8. Method according to claim 7, characterized in that the recursion factor (K(x-i,y-j,t-k)) used to adapt the recursion factor (K(x,y,t)) is filtered before it is supplied to the controller (11).

9. Method according to any previous claim, characterized in that an optimization method using the $L_p$-norm is used to adapt the recursion factor.

10. Method according to any previous claims 1-8, characterized in that a piecemeal linear function is used to adapt the recursion factor.

11. Method according to any previous claim, characterized in that the picture sequence is a television picture sequence.

12. Method according to any previous claims 1-10, characterized in that the picture sequence is a picture sequence of a projection device.

13. Method according to any previous claims 1-10, characterized in that the picture sequence is a picture sequence of a multi-media device.

14. Filter for eliminating the noise in a picture sequence, which comprises:

a non-linear filter (9) acting as a first filter stage to provide output information M(x,y,t);
a recursive filter (10) having a recursion factor (K(x,y,t)) connected to the output of the non-linear filter (9) and acting as a second filter stage to provide filtered information Y(x,y,t);
a memory (2) connected to the output of the recursive filter (10) to store the filtered information Y(x,y,t); and
a non-linear controller (11) connected to the recursive filter (10) in order to adapt the recursion factor (K(x,y,t)) of the recursive filter (10), the controller (11) having an input for the difference between said information M(x,y,t) and the filtered previous information Y(x,y,t-1) to be used in the control process, and characterized in that:
the controller has an additional input for a previous recursion factor (K(x,y,t-1)) to be used in the control process.

15. Filter according to claim 14, characterized in that the output of the memory (2) is connected to one input of the controller (11) so that the filtered previous information Y(x,y,t-1) is supplied from the memory (2) to the controller (11).

16. Filter according to claim 15, characterized in that the output of the non-linear filter (9) is connected to one input of the controller (11) so that the output information M(x,y,t) is supplied to the controller (11), and that the output of the controller (11) is connected to the recursive filter (10) so that a first adapted recursion factor (K(x,y,t)) is supplied from the controller (11) to the recursive filter (10).

17. Filter according to claim 15, characterized in that its output is connected to one input of the controller (11) so that the input information X(x,y,t) is supplied to the controller (11), and that the output of the controller (11) is connected to the recursive filter (10) so that a first adapted recursion factor (K(x,y,t)) is supplied from the controller (11) to the recursive filter (10).

18. Filter according to claim 15, characterized in that the non-linear filter (9) is connected to one input of the controller (11) so that a first estimate generated by the non-linear filter (9) is supplied to the controller (11), and that the output of the controller is connected to the recursive filter (10) so that a first adapted recursion factor (K(x,y,t)) is supplied from the controller (11) to the recursive filter (10).

19. Filter according to claim 16 and 18 characterized in that the non-linear filter (9) is connected to one input of the controller (11) so that the controller (11) is supplied with a second estimate in addition to the result generated by the non-linear filter (9).

20. Filter according to claim 15 characterized in that the recursive filter (10) is connected to the controller so that a second recursion factor K(x-i,y-j,t-k) is supplied from the recursive filter (10) to the controller (11).

**21.** Filter according to claim 14 characterized in that the non-linear filter (9) is a rank-order based filter.

**22.** Filter according to any of claims 14-21, characterized in that the recursive filter (10) is at least a recursive filter (10) of the first order.

**23.** Filter according to any previous claims 14-22, characterized in that the picture sequence is a television picture sequence.

**24.** Filter according to any previous claims 14-22, characterized in that the picture sequence is a picture sequence of a projection device.

**25.** Filter according to any previous claims 14-22, characterized in that the picture sequence is a picture sequence of a multi-media device.

**Patentansprüche**

**1.** Verfahren zum Entfernen von Rauschen in einer Bildsequenz, wobei die Eingangsinformation $X(x,y,t)$ durch ein nichtlineares Filter (9), das als erste Filterstufe wirkt, gefiltert wird, um eine Ausgangsinformation $M(x,y,t)$ bereitzustellen; das Ausgangssignal $M(x,y,t)$ des nichtlinearen Filters (9) wird durch ein rekursives Filter (10) mit einem Rekursionsfaktor $(K(x,y,t))$, das als zweite Filterstufe wirkt, um eine gefilterte Ausgangsinformation $Y(x,y,t)$ bereitzustellen; die gefilterte Information $Y(x,y,t)$ wird in einem Speicher (2) gespeichert; die gefilterte frühere Information $Y(x,y,t-1)$ wird aus dem Speicher (2) ausgelesen; der Rekursionsfaktor $(K(x,y,t))$ des rekursiven Filters (10) wird nichtlinear mit der Steuereinrichtung (11) angepaßt; und wenigstens die Differenz zwischen der besagten Information $M(x,y,t)$ und der besagten gefilterten früheren Information $Y(x,y,t-1)$ wird der besagten Steuereinrichtung (11) zur Verwendung in dem Steuerungsverfahren zugeführt, dadurch gekennzeichnet, daß ein früherer Rekursionsfaktor $(K(x,y,t-1))$ der Steuereinrichtung (11) zusätzlich zur Verwendung im Steuerungsverfahren zur Verfügung gestellt wird.

**2.** Verfahren nach Anspruch 1, dadurch gekennzeichnet daß die gefilterte frühere Information $Y(x,y,t-1)$ vom Speicher (2) an die Rekursionssteuereinrichtung (11) angelegt wird zur rekursiven Filterung der nächsten Eingangsinformation $M(x,y,t)$.

**3.** Verfahren nach Anspruch 1 oder 2, dadurch gekennzeichnet, daß mehrere verschiedene Bildinformationen verwendet werden, um den Rekursionsfaktor $(K(x,y,t))$ des rekursiven Filters (10) anzupassen.

**4.** Verfahren nach Anspruch 3, dadurch gekennzeichnet, daß die Differenz der Bildinformationen $X(x,y,t) - Y(x,y,t-1)$ zur Anpassung des Rekursionsfaktors $(K(x,y,t))$ des rekursiven Filters (10) verwendet wird, wobei die Differenz der Bildinformationen gebildet wird aus der ungefilterten Information $X(x,y,t)$ und der gefilterten früheren Information $Y(x,y,t-1)$, die aus dem Speicher (2) ausgelesen wurde.

**5.** Verfahren nach Anspruch 3, dadurch gekennzeichnet, daß eine Differenzbildinformation verwendet wird, um den Rekursionsfaktor $(K(x,y,t))$ des rekursiven Filters (10) anzupassen, wobei die Differenzbildinformation gebildet wird aus einem Schätzwert, der von dem nichtlinearen Filter (9) erhalten wird und der gefilterten früheren Information $Y(x,y,t-1)$, die aus dem Speicher (2) ausgelesen wurde.

**6.** Verfahren nach Anspruch 4 oder 5, dadurch gekennzeichnet, daß der Absolutwert der Differenzbildinformation zur Anpassung des Rekursionsfaktors $(K(x,y,t))$ des rekursiven Filters (10) verwendet wird.

**7.** Verfahren nach einem der vorstehenden Ansprüche, dadurch gekennzeichnet, daß zusätzlich ein Rekursionsfaktor $(K(x-i,y-j,t-k))$ zur Anpassung des Rekursionsfaktors $(K(x,y,t))$ des rekursiven Filters (10) verwendet wird.

**8.** Verfahren nach Anspruch 7, dadurch gekennzeichnet, daß der Rekursionsfaktor $(K(x-i,y-j,t-k))$ zur Anpassung des Rekursionsfaktors $(K(x,y,t))$ gefiltert wird, bevor er der Steuereinrichtung (11) zur Verfügung gestellt wird.

**9.** Verfahren nach einem der vorstehenden Ansprüche, dadurch gekennzeichnet, daß ein Optimierungsverfahren entsprechend der $L_p$- Norm verwendet wird, um den Rekursionsfaktor anzupassen.

**10.** Verfahren nach einem der Ansprüche 1 bis 8, dadurch gekennzeichnet, daß eine schrittweise lineare Funktion zur Anpassung des Rekursionsfaktors verwendet wird.

11. Verfahren nach einem der vorstehenden Ansprüche, dadurch gekennzeichnet, daß die Bildsequenz eine Fernsehbildsequenz ist.

12. Verfahren nach einem der Ansprüche 1 bis 10, dadurch gekennzeichnet daß die Bildsequenz eine Bildsequenz aus einer Projektions- Einrichtung ist.

13. Verfahren nach einem der Ansprüche 1 bis 10, dadurch gekennzeichnet, daß die Bildsequenz eine Bildsequenz aus einer Multimediaeinrichtung ist.

14. Filter zum Entfernen von Rauschen in einer Bildsequenz bestehend aus:

    einem nichtlinearen Filter (9), das als erste Filterstufe arbeitet, um eine Ausgangsinformation M(x,y,t) bereitzustellen;
    einem rekursiven Filter (10) mit einem Rekursionsfaktor (K(x,y,t)), angeschlossen an den Ausgang des nichtlinearen Filters (9), das als zweite Filterstufe arbeitet um eine gefilterte Information Y(x,y,t) bereitzustellen;
    einem Speicher (2), angeschlossen an den Ausgang des rekursiven Filters (10) zur Speicherung der gefilterten Information Y(x,y,t); und
    einer nichtlinearen Steuereinrichtung (11), angeschlossen an das rekursive Filter (10) zur Anpassung des Rekursionsfaktors (K(x,y,t)) des rekursiven Filters (10), wobei die Steuereinrichtung (11) einen Eingang aufweist für die Differenz zwischen der besagten Information M(x,y,t) und der gefilterten früheren Information Y(x,y,t-1) zur Verwendung in dem Steuerungsverfahren, gekennzeichnet dadurch, daß die Steuereinrichtung einen weiteren Eingang für einen früheren Rekursionsfaktor (K(x,y,t-1)) zur Verwendung in dem Steuerungsverfahren aufweist.

15. Filter entsprechend Anspruch 14, dadurch gekennzeichnet, daß der Ausgang des Speichers (2) an einen Eingang der Steuereinrichtung (11) angeschlossen ist, sodaß die gefilterte frühere Information Y(x,y,t-1) vom Speicher (2) an die Steuereinrichtungen (11) übergeben wird.

16. Filter entsprechend Anspruch 15, dadurch gekennzeichnet, daß der Ausgang des nichtlinearen Filters (9) an einen Eingang der Steuereinrichtung (11) angeschlossen ist, so daß die Ausgangsinformation M(x,y,t) der Steuereinrichtung (11) zur Verfügung gestellt wird und daß der Ausgang der Steuereinrichtung (11) angeschlossen ist an das rekursive Filter (10), sodaß ein erster angepaßter Rekursionsfaktor (K(x,y,t)) von der Steuereinrichtung (11) dem rekursiven Filter (10) zur Verfügung gestellt wird.

17. Filter entsprechend Anspruch 15, gekennzeichnet dadurch, daß dessen Ausgang an einen Eingang der Steuereinrichtung (11) angeschlossen ist, sodaß die Eingangsinformation X(x,y,t) der Steuereinrichtung (11) zur Verfügung gestellt wird und daß der Ausgang der Steuereinrichtung (11) an das rekursive Filter (10) angeschlossen ist, so daß ein erster angepaßter Rekursionsfaktor (K(x,y,t)) von der Steuereinrichtung (11) dem rekursiven Filter (10) zur Verfügung gestellt wird.

18. Filter entsprechend Anspruch 15, gekennzeichnet dadurch, daß das nichtlineare Filter (9) angeschlossen ist an einen Eingang der Steuereinrichtung (11), so daß ein erster Schätzwert, der von dem nichtlinearen Filter (9) bereitgestellt wird, der Steuereinrichtung (11) zur Verfügung gestellt wird, und daß der Ausgang der Steuereinrichtung an das rekursive Filter (10) angeschlossen ist, so daß ein erster angepaßter Rekursionsfaktor (K(x,y,t)) von der Steuereinrichtung (11) für das rekursive Filter (10) zur Verfügung gestellt wird.

19. Filter entsprechend Anspruch 16 oder 18, dadurch gekennzeichnet, daß das nichtlineare Filter (9) angeschlossen ist an einen Eingang der Steuereinrichtung (11), so daß die Steuereinrichtung (11) zusätzlich mit einem zweiten Schätzwert zusätzlich zu dem Ergebnis, das von dem nichtlinearen Filter (9) erhalten wird, versorgt wird.

20. Filter entsprechend Anspruch 15, dadurch gekennzeichnet, daß das rekursive Filter (10) so an die Steuereinrichtung angeschlossen ist, daß ein zweiter Rekursionsfaktor K(x-i,y-j,t-k) von der Steuereinrichtung (11) dem rekursiven Filter (10) zur Verfügung gestellt wird.

21. Filter entsprechend Anspruch 14, dadurch gekennzeichnet, daß das nichtlineare Filter (9) ein Rank-Order- Filter ist.

**22.** Filter nach einem der Ansprüche 14 bis 21, gekennzeichnet dadurch, daß das rekursive Filter (10) wenigstens ein rekursive Filter (10) erster Ordnung ist.

**23.** Filter nach einem der Ansprüche 14 bis 22, gekennzeichnet dadurch, daß die Bildsequenz eine Fernsehbildsequenz ist.

**24.** Filter nach einem der Ansprüche 14 bis 22, gekennzeichnet dadurch, daß die Bildsequenz eine Bildsequenz einer Projektionseinrichtung ist.

**25.** Filter nach einem der Ansprüche 14 bis 22, gekennzeichnet dadurch, daß die Bildsequenz eine Bildsequenz einer Multimediaeinrichtung ist.

**Revendications**

**1.** Procédé pour éliminer le bruit dans une séquence d'images, dans lequel :

les informations d'entrée $X(x, y, t)$ sont filtrées par un filtre non linéaire (9) agissant en tant que premier étage de filtre pour donner des informations de sortie $M(x, y, t)$ ;
la sortie $M(x, y, t)$ du filtre non linéaire (9) est filtrée par un filtre récursif (10) ayant un facteur de récursivité ($K(x, y, t)$) et agissant en tant que second étage de filtre pour donner des informations filtrées $Y(x, y, t)$ ;
les informations filtrées $Y(x, y, t)$ sont stockées dans une mémoire (2) ;
les informations filtrées précédentes $Y(x, y, t-1)$ sont obtenues à partir de la mémoire (2) ;
le facteur de récursivité ($K(x, y, t)$) du filtre récursif (10) est adapté de manière non linéaire par une unité de commande (11) ; et
au moins la différence entre lesdites informations $M(x, y, t)$ et lesdites informations filtrées précédentes $Y(x, y, t-1)$ est procurée à ladite unité de commande (11) pour être utilisée dans le processus de commande, et caractérisé en ce que :
un facteur de récursivité précédent ($K(x, y, t-1)$) est procuré de plus à ladite unité de commande (11) pour être utilisé dans le processus de commande.

**2.** Procédé selon la revendication 1, caractérisé en ce que les informations filtrées précédentes $Y(x, y, t-1)$ sont amenées en provenance de la mémoire (2) à l'unité de commande de récursivité (11) pour le filtrage récursif des informations d'entrée suivantes $M(x, y, t)$.

**3.** Procédé selon la revendication 1 ou la revendication 2, caractérisé en ce que plusieurs informations différentes d'image de différence sont utilisées pour adapter le facteur de récursivité ($K(x, y, t)$) du filtre récursif (10).

**4.** Procédé selon la revendication 3, caractérisé en ce que les informations d'image de différence $X(x, y, t) - Y(x, y, t-1)$ sont utilisées pour adapter le facteur de récursivité ($K(x, y, t)$) du filtre récursif (10), les informations d'image de différence étant formées par les informations non filtrées $X(x, y, t)$ et par les informations filtrées précédentes $Y(x, y, t-1)$ obtenues à partir de la mémoire (2).

**5.** Procédé selon la revendication 3, caractérisé en ce que des informations d'image de différence sont utilisées pour adapter le facteur de récursivité ($K(x, y, t)$) du filtre récursif (10), les informations d'image de différence étant formées par une estimation produite par le filtre non linéaire (9) et par les informations filtrées précédentes $Y(x, y, t-1)$ obtenues à partir de la mémoire (2).

**6.** Procédé selon la revendication 4 ou la revendication 5, caractérisé en ce que la valeur absolue des informations d'image de différence est utilisée pour adapter le facteur de récursivité ($K(x, y, t)$) du filtre récursif (10).

**7.** Procédé selon l'une quelconque des revendications précédentes, caractérisé en ce que de plus un facteur de récursivité ($K(x-i, y-j, t-k)$) est utilisé pour adapter le facteur de récursivité ($K(x, y, t)$) du filtre récursif (10).

**8.** Procédé selon la revendication 7, caractérisé en ce que le facteur de récursivité ($K(x-i, y-j, t-k)$) utilisé pour adapter le facteur de récursivité ($K(x, y, t)$) est filtré avant qu'il soit amené à l'unité de commande (11).

**9.** Procédé selon l'une quelconque des revendications précédentes, caractérisé en ce qu'un procédé d'optimisation utilisant la norme $L_p$ est utilisé pour adapter le facteur de récursivité.

9

**10.** Procédé selon l'une quelconque des revendications 1 à 8, caractérisé en ce qu'une fonction linéaire par morceaux est utilisée pour adapter le facteur de récursivité.

**11.** Procédé selon l'une quelconque des revendications précédentes, caractérisé en ce que la séquence d'images est une séquence d'images de télévision.

**12.** Procédé selon l'une quelconque des revendications 1 à 10, caractérisé en ce que la séquence d'images est une séquence d'images d'un dispositif de projection.

**13.** Procédé selon l'une quelconque des revendications 1 à 10, caractérisé en ce que la séquence d'images est une séquence d'images d'un dispositif multimédia.

**14.** Filtre pour éliminer le bruit dans une séquence d'images, qui comprend :

un filtre non linéaire (9) agissant en tant que premier étage de filtre pour donner des informations de sortie M(x, y, t) ;
un filtre récursif (10) ayant un facteur de récursivité (K(x, y, t)) relié à la sortie du filtre non linéaire (9) et agissant en tant que second étage de filtre pour donner des informations filtrées Y(x, y, t) ;
une mémoire (2) reliée à la sortie du filtre récursif (10) pour stocker les informations filtrées Y(x, y, t) ; et
une unité de commande non linéaire (11) reliée au filtre récursif (10) afin d'adapter le facteur de récursivité (K(x, y, t)) du filtre récursif (10), l'unité de commande (11) ayant une entrée pour la différence entre lesdites informations M(x, y, t) et les informations filtrées précédentes Y(x, y, t-1) pour être utilisée dans le processus de commande, et caractérisé en ce que :
l'unité de commande a une entrée supplémentaire pour un facteur de récursivité précédent (K(x, y, t-1)) pour être utilisé dans le processus de commande.

**15.** Filtre selon la revendication 14, caractérisé en ce que la sortie de la mémoire (2) est reliée à une entrée particulière de l'unité de commande (11) de sorte que les informations filtrées précédentes Y(x, y, t-1) sont amenées en provenance de la mémoire (2) vers l'unité de commande (11).

**16.** Filtre selon la revendication 15, caractérisé en ce que la sortie du filtre non linéaire (9) est reliée à une entrée particulière de l'unité de commande (11) de sorte que les informations de sortie M(x, y, t) sont amenées à l'unité de commande (11), et en ce que la sortie de l'unité de commande (11) est reliée au filtre récursif (10) de sorte qu'un premier facteur de récursivité adapté (K(x, y, t)) est amené en provenance de l'unité de commande (11) vers le filtre récursif (10).

**17.** Filtre selon la revendication 15, caractérisé en ce que sa sortie est reliée à une entrée particulière de l'unité de commande (11) de sorte que les informations d'entrée X(x, y, t) sont amenées vers l'unité de commande (11), et en ce que la sortie de l'unité de commande (11) est reliée au filtre récursif (10) de sorte qu'un premier facteur de récursivité adapté (K(x, y, t)) est amené en provenance de l'unité de commande (11) vers le filtre récursif (10).

**18.** Filtre selon la revendication 15, caractérisé en ce que le filtre non linéaire (9) est relié à une entrée particulière de l'unité de commande (11) de sorte qu'une première estimation produite par le filtre non linéaire (9) est amenée à l'unité de commande (11), et en ce que la sortie de l'unité de commande est reliée au filtre récursif (10) de sorte qu'un premier facteur de récursivité adapté (K(x, y, t)) est amené en provenance de l'unité de commande (11) vers le filtre récursif (10).

**19.** Filtre selon les revendications 16 et 18, caractérisé en ce que le filtre non linéaire (9) est relié à une entrée particulière de l'unité de commande (11) de sorte que l'unité de commande (11) est alimentée par une seconde estimation en plus du résultat produit par le filtre non linéaire (9).

**20.** Filtre selon la revendication 15, caractérisé en ce que le filtre récursif (10) est relié à l'unité de commande de sorte qu'un second facteur de récursivité K(x-i, y-j, t-k) est amené en provenance du filtre récursif (10) vers l'unité de commande (11).

**21.** Filtre selon la revendication 14, caractérisé en ce que le filtre non linéaire (9) est un filtre du type à classement hiérarchique.

**22.** Filtre selon l'une quelconque des revendications 14 à 21, caractérisé en ce que le filtre récursif (10) est au moins un filtre récursif (10) du premier ordre.

**23.** Filtre selon l'une quelconque des revendications 14 à 22, caractérisé en ce que la séquence d'images est une sequence d'images de télévision.

**24.** Filtre selon l'une quelconque des revendications 14 à 22, caractérisé en ce que la séquence d'images est une sequence d'images d'un dispositif de projection.

**25.** Filtre selon l'une quelconque des revendications 14 à 22, caractérisé en ce que la séquence d'images est une séquence d'images d'un dispositif multimédia.

FIG. 1

FIG. 2

FIG. 3

FIG. 4

FIG. 5

FIG. 6

FIG. 7